# EUROPEAN PATENT APPLICATION

(11) **EP 1 046 834 A2**
(43) Date of publication of application: **25.10.2000**
(21) Application number: 00105556.5
(22) Date of filing: 16.03.2000
(51) Int. Cl.: F16F 15/30

(54) **Dual mass flywheel for automotive vehicle**

(30) Priority: 31.03.1999 KR 9911335
(71) Applicant: Park, Dong-Hoon, Suwon-Si, Kyunggi-Do (KR)
(72) Inventor: Park, Dong-Hoon, Suwon-Si, Kyunggi-Do (KR)
(74) Representative: Viering, Jentschura & Partner

(57) **Abstract**

A dual mass flywheel for a vehicle includes a primary flywheel connected to a crankshaft of an engine; a damper housing integrally formed in a circumferential direction of the primary flywheel; a secondary flywheel connected to an input shaft of a transmission and rotatably mounted on a hub of the primary flywheel; driven fingers integrally formed on the second flywheel and inserted vertically into the damper housing to be forced by the damper springs. The damper springs comprises two spring sets symmetrically disposed within the damper housing, one end of each damper springs being driven by the stoppers which are integrally formed on the primary flywheel, while the other end of spring sets drives the driven fingers of the secondary flywheel. The primary and second flywheels are integrally provided with projections for preventing the damper springs from being excessively compressed and damaged. The damper springs comprises a plurality of springs, each having different spring coefficients and the damper springs are supported by a plurality of sliding guides or blocks.

## Description

### BACKGROUND OF THE INVENTION

### (a) Field of the Invention

The present invention relates to a flywheel for an automotive vehicle and, more particularly, to a dual mass flywheel designed to effectively dampen torsional vibration to reduce not only rattle noise, which is generally generated in a manual transmission, but also booming noise of a vehicle.

### (b) Description of the Related Art

Since engine torque is generated only during the expansion stroke among intake, compression, expansion and exhaust strokes, the torque generated in the engine is irregularly vibrated when supplied to a transmission, even when the engine is operated at very high speed.

Particularly, in the case of a manual transmission, the vibration of the engine torque causes rattle noise as it encounters a backlash between teeth of transmission gears.

In addition, if the vibration frequency of the engine is in a range identical to a natural frequency of the transmission, resonance occurs such that booming noise is generated in a vehicle.

Therefore, in the conventional art, to solve the above problems, a damper such as, for example, springs are disposed in a clutch disk connected to an input shaft of the transmission to reduce such noise.

However, when the damper springs are disposed in the clutch disk, since the space defined on an outer circumference of a clutch disk is limited, it is difficult to provide a big torsional damping angle between a flywheel and an input shaft of the transmission. This makes it almost impossible to avoid jerk of a vehicle when abruptly operating a gas pedal. In addition, damper springs should be designed to have a high spring coefficient to transmit engine torque. However, since such springs with high spring coefficient can not absorb minute vibrations, it is difficult to completely prevent the rattle noise. Furthermore, since a range of the natural frequency of the transmission can not be completely separated from a range of the vibration frequency of the engine, the booming noise also can not be completely avoided.

Therefore, in recent years, a new technology for solving the above problems has been proposed. For example, there are disclosed dual mass flywheels in which damper springs are disposed between primary and secondary flywheels that are connected to an engine and a transmission, respectively.

In the dual mass flywheel, a mass of the secondary flywheel is connected to an input shaft of a transmission to lower the range of natural frequency of the transmission below the range of the vibration frequency of an engine. As a result, resonance between the engine and transmission can be avoided, thereby effectively eliminating the booming noise of a vehicle.

In addition, since the damper springs with low spring coefficient can be disposed on an outer circumference of the flywheel, it is possible to effectively reduce rattle noise by absorbing minute vibrations. Furthermore, it became possible to maximize a torsional angle between the primary flywheel connected to the engine and the secondary flywheel connected to the transmission, thereby preventing jerk of a vehicle.

However, in conventional dual mass flywheels, since a separate driven plate is attached to the secondary flywheel to transmit torque of the primary flywheel via damper springs, and a separate sealed damper housing which retains the damper springs is also assembled to primary flywheel, the structure of the dual mass flywheel is greatly complicated, resulting in increased number of parts and manufacturing costs. In addition, since the structure of primary flywheel is complicated and a space in the clutch housing is limited, it is inevitable that a large portion of primary flywheel being made of pressed parts, so the mass of the primary flywheel became lesser than that of the conventional single mass flywheel made of cast iron. This causes excessive vibration on accessory drive belts of the engine in most cases.

### SUMMARY OF THE INVENTION

Therefore, the present invention has been made in an effort to solve the above problems.

It is an objective of the present invention to provide a dual mass flywheel that is simple in structure, but yet prevents rattle noise of a transmission, and booming noise and jerk of a vehicle effectively.

It is another objective of the present invention to provide a dual mass flywheel that is increased in mass of the primary flywheel, thereby minimizing vibration of moving parts of an engine.

To achieve the above objectives, the present invention provides a dual mass flywheel for a vehicle comprising a primary flywheel connected to a crankshaft of an engine, a damper housing integrally formed in a circumferential direction of the primary flywheel; a secondary flywheel connected to an input shaft of a transmission and rotatably mounted on a hub of the primary flywheel, and driven fingers integrally formed on the second flywheel and inserted vertically into the damper housing to be forced by the damper springs.

The damper springs comprises two spring sets symmetrically disposed within the damper housing, one end of each damper spring sets being driven by the stoppers which are integrally formed on the primary flywheel, while the other end of each spring sets drive the driven fingers of the secondary flywheel.

The primary and second flywheels are integrally provided with projections for preventing the damper springs from being excessively compressed and damaged.

The damper springs comprises a plurality of springs, each having different spring coefficients and the damper springs are supported by a plurality of sliding guides or blocks.

Alternatively, in case of a viscous material is applied in the damper housing to enhance a damping effect and lubricity, the damper housing may be sealed by sealing elements between the primary and secondary flywheels.

### BRIEF DESCRIPTION OF THE DRAWINGS

The accompanying drawings, which are incorporated in and constitute a part of the specification, illustrate embodiments of the invention, and, together with the description, serve to explain the principles of the invention;
Fig. 1 is a front view of a dual mass flywheel according to a first embodiment of the present invention;
Fig. 2 is a sectional view taken along a line IV-IV of Fig. 1;
Fig. 3 is a front view of a dual mass flywheel according to a second embodiment of the present invention;
Fig. 4 is a sectional view taken along a line VI-VI of a dual mass flywheel according to a second embodiment of the present invention; and
Fig. 5 is a graph illustrating torsional characteristics of a dual mass flywheel according to the present invention.

### DETAILED DESCRIPTION OF THE PREFERRED EMBODIMENTS

Preferred embodiments of the present invention will now be described in detail with reference to the accompanying drawings.

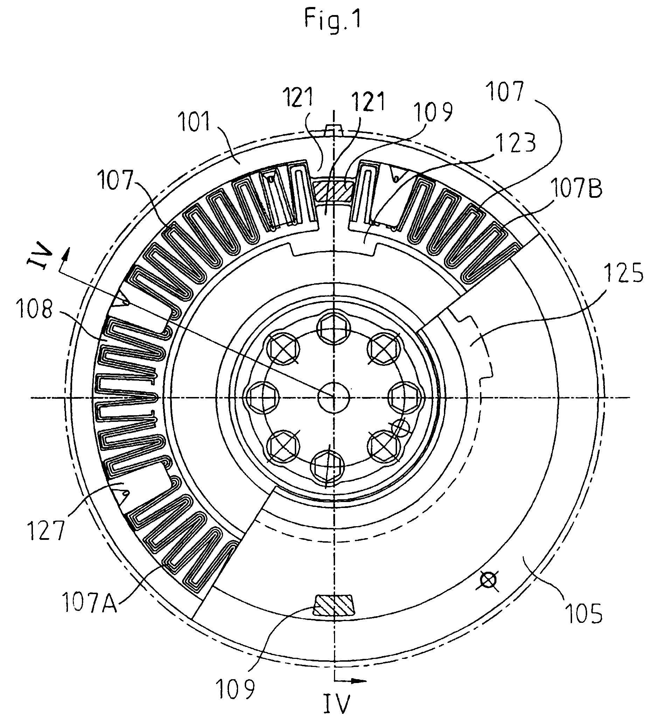

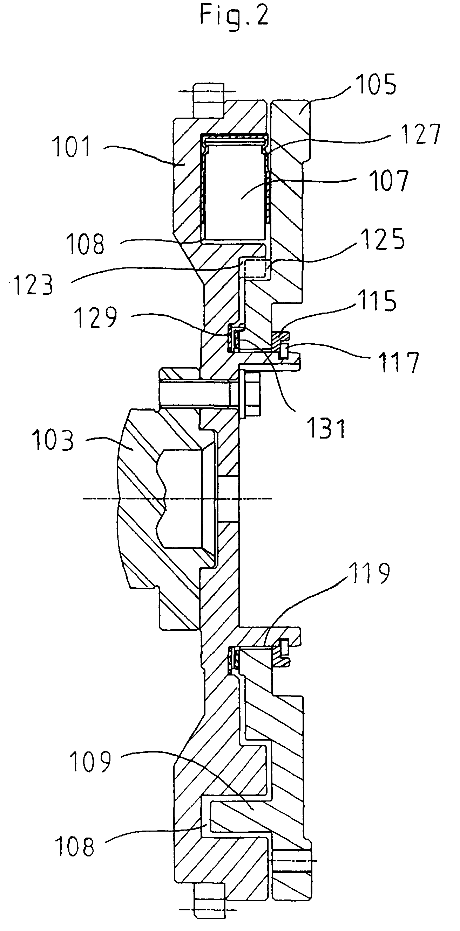

Figs. 1 and 2 show a dual mass flywheel according to a first embodiment of the present invention.

As shown in the drawings, a dual mass flywheel comprises a primary flywheel 101 connected with a crankshaft 103 of an engine to rotate at an identical speed of the engine, a secondary flywheel 105 connected to an input shaft of a transmission through a clutch (not shown) and rotatably mounted on a hub of the primary flywheel 101, and damper springs 107 disposed within a damper housing 108 which is integrally formed inside of the primary flywheel 101 to transmit engine torque while absorbing vibration to driven fingers 109, which is integrally formed on the secondary flywheel 105.

A thrust bearing 115 supports a load applied to the secondary flywheel 105 in an axial direction and a snap ring 117, for preventing the secondary flywheel 105 from moving away from the hub of the primary flywheel 101 in the axial direction, is inserted on the hub of the primary flywheel 101.

A bushing 119 is inserted on an inner circumference of the secondary flywheel 105 so that the secondary flywheel rotates freely on the hub of the primary flywheel 101.

The damper springs 107 comprises two spring sets 107A and 107B that are symmetrically disposed within the damper housing 108 in a circumferential direction (see Fig. 1). Each opposing end of spring sets 107A and 107B is driven by the stoppers 121 formed in the damper housing 108 and projected symmetrically at a center of the primary flywheel 101. The stoppers 121 are integrally formed with a primary flywheel 101.

The driven fingers 109 are integrally formed on the secondary flywheel 105 and perpendicularly inserted into a space defined between the spring sets 107A and 107B. When the primary flywheel 101 rotates, one end of each spring sets 107A and 107B, in a state where the other end of the spring sets 107A and 107B is driven by the stoppers 121, drives the driven fingers 109 to rotate the secondary flywheel 105.

That is, the secondary flywheel 105 is driven by the damper springs 107, and while this operation is taking place, the engine torque vibrations are absorbed by a compression of the damper springs 107, preventing the rattle noise.

In addition, when there occur variations of the torque caused by, for example, the abrupt operation of a gas pedal, since the damper springs 107 are designed to be compressed in a great amount, the effective damping operation is conducted while the primary and secondary flywheels 101 and 102 are moving at a large relative rotation angle, preventing the jerk of the vehicle. However, if the rotation angle is excessively large, since the damper springs 107 may be damaged, projections 123 and 125 are respectively formed on the primary and secondary flywheels 101 and 105 to restrict the relative rotation angle to a predetermined level (see Fig. 1).

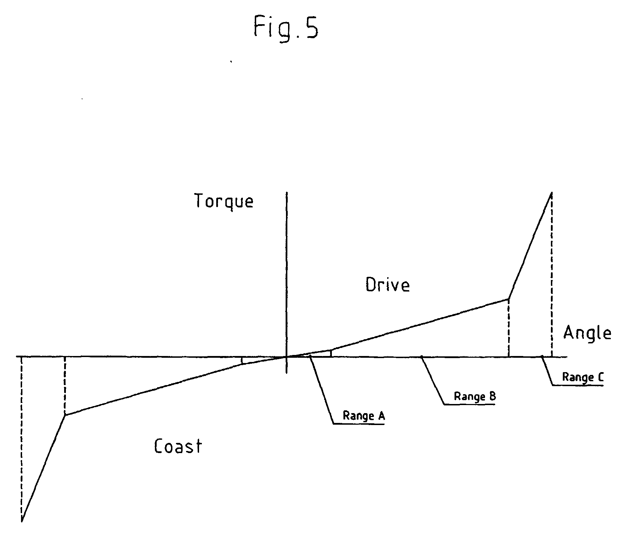

The spring sets 107A and 107B of the damper springs 107 are zigzag-shaped springs but conventional cylindrical coiled wire springs can also be used, according to characteristics of an engine used. Particularly, it is preferable to use a spring designed to vary its spring coefficient in multiple steps according to its compression. In the first embodiment, the multiply stacked zigzag-shaped springs with different length and thickness are shown, in order to get multiple steps of spring coefficients (see Fig. 1 and 5).

To provide smooth sliding of the spring sets 107A and 107B to the faces of the damper housing 108, a plurality of sliders 127 are mounted on the spring sets. The surfaces of the sliders 127 are coated with special material such as PTFE to ensure lubrication free sliding. Inside surfaces of damper housing 108 may also be coated.

To support clutch release load generated when the clutch is operated, the thrust bearing 115, made of, for example, an engineering plastic, is placed on the hub of the primary flywheel 101. In this embodiment, the mounting direction of the thrust bearing is for the case of a pull type clutch is employed. In addition, to prevent the secondary flywheel 105 from being moved away when the clutch release load is applied, the snap ring 117 is mounted on the hub of the primary flywheel 101.

To provide additional friction for effective damping of a dual mass flywheel, a friction washer 129 pressed by a disk spring 131 is mounted on the hub of primary flywheel 101.

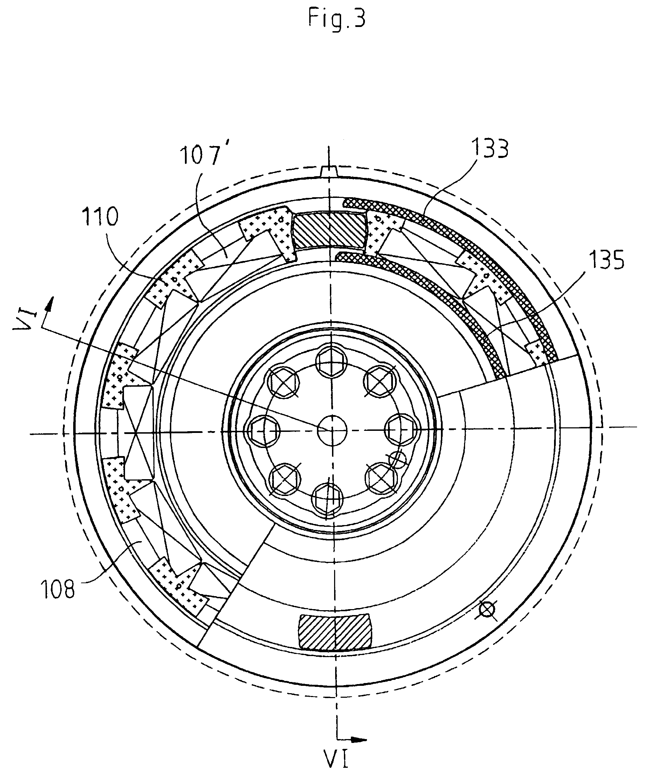

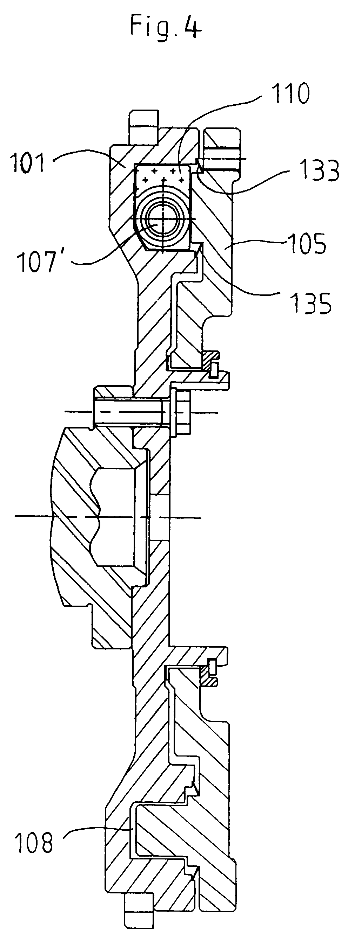

Figs. 3 and 4 show a dual mass flywheel according to a second embodiment.

A dual mass flywheel of this embodiment is substantially identical to the first embodiment except that the damping springs comprise a plurality of springs 107' which have different spring coefficients, allows for a multi-step damping effect (see Fig. 5).

A plurality of sliding blocks 110 are disposed between the springs 107' and to fixedly support them. And when the springs are compressed at a large variation, sliding blocks 110 stop the springs 107' from being compressed beyond an allowable level, thereby preventing the springs from being damaged.

In addition, in case of a viscous material is applied into the damper housing 108 to enhance the damping effect and lubricity, an outer sealing 133 and an inner sealing 135 can be inserted between the primary and secondary flywheels 101 and 105.

As described above, in this invention, since the damper housing, the stopper, the projections and the driven fingers are integrally formed on the primary and secondary flywheels, the number of components is greatly reduced compared with conventional dual mass flywheels, making it easy to manufacture and lower the cost.
Also, due to its' simple structure, the entire primary flywheel can be made of cast iron, so that the mass moment of inertia is comparable to that of conventional single mass flywheel, making it possible to minimize the vibration of engine moving parts such as accessory drive belts.

While this invention has been described in connection with what is presently considered to be the most practical and preferred embodiment, it is to be understood that the invention is not limited to the disclosed embodiment, but, on the contrary, is intended to cover various modifications and equivalent arrangements included within the spirit and scope of the appended claims.

## Claims

1. A dual mass flywheel for a vehicle, comprising a primary flywheel connected to a crankshaft of an engine, a damper housing being integrally formed in the circumferential direction of the primary flywheel, a secondary flywheel connected to an input shaft of a transmission and rotatably mounted on a hub of the primary flywheel, characterized in that the dual mass flywheel further comprises driven fingers integrally formed on the second flywheel and inserted vertically into the damper housing to be forced by the damper springs, and one face of a damper housing is defined by the secondary flywheel while other faces are defined by the primary flywheel.

2. A dual mass flywheel of claim 1 characterized in that the damper springs are symmetrically disposed within a damper housing, and one end of each damper spring sets is driven by stoppers which are integrally formed with a primary flywheel, while the other end of each damper spring sets drives the driven fingers of the secondary flywheel.

3. A dual mass flywheel of claim 1 characterized in that the primary and second flywheels are integrally provided with projections for preventing the damper springs from being excessively compressed.

4. A dual mass flywheel of claim 2 characterized in that the damper spring sets comprise a multiply stacked zigzag shaped springs, each having different length and thickness.

5. A dual mass flywheel of claim 2 characterized in that the damper spring sets comprise conventional cylindrical coiled wire springs, each having different length and wire thickness.

6. A dual mass flywheel of claim 2 characterized in that sliders are mounted on the damper spring sets, and surfaces of the sliders and the damper housing are coated with special materials for oil less lubrication.

7. A dual mass flywheel of claim 2 characterized in that the springs are supported by a plurality of sliding blocks and the surfaces of the sliding blocks and damper housing are coated with special materials for oil less lubrication.

8. A dual mass flywheel of claim 2 characterized in that viscous material is applied in the damper housing to enhance a damping effect and lubricity and the damper housing is sealed by sealing elements between the primary and secondary flywheels.

9. A dual mass flywheel of claim 1 characterized in that a thrust bearing is formed on the hub of the primary flywheel to support clutch release load.

10. A dual mass flywheel of claim 1 characterized in that a snap ring is mounted on the hub of the primary flywheel.
